(19) Europäisches Patentamt
European Patent Office
Office européen des brevets

(11) EP 2 759 562 B1

(12) EUROPEAN PATENT SPECIFICATION

(45) Date of publication and mention
of the grant of the patent:
**18.11.2015 Bulletin 2015/47**

(51) Int Cl.:
*C08G 69/26* (2006.01)      *C08K 7/02* (2006.01)
*C08L 77/06* (2006.01)

(21) Application number: **12834520.4**

(22) Date of filing: **06.09.2012**

(86) International application number:
**PCT/JP2012/072679**

(87) International publication number:
**WO 2013/042541 (28.03.2013 Gazette 2013/13)**

(54) **SEMI-AROMATIC POLYAMIDE AND MOLDED BODY COMPRISING SAME**

HALBAROMATISCHES POLYAMID UND FORMKÖRPER DAMIT

POLYAMIDE SEMI-AROMATIQUE ET CORPS MOULÉ LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.09.2011 JP 2011207371**

(43) Date of publication of application:
**30.07.2014 Bulletin 2014/31**

(73) Proprietor: **Unitika, Ltd.
Amagasaki-shi, Hyogo 660-0824 (JP)**

(72) Inventors:
• **NAKAI, Makoto**
  **Kyoto 611-0021 (JP)**
• **MORIMOTO, Mariko**
  **Kyoto 611-0021 (JP)**
• **KOBAYASHI, Ryosuke**
  **Kyoto 611-0021 (JP)**
• **KITORA, Yuji**
  **Kyoto 611-0021 (JP)**

(74) Representative: **Vigand, Philippe et al
Novagraaf International SA
3 chemin de l'Echo
1213 Onex Geneva (CH)**

(56) References cited:
EP-A2- 0 188 328      JP-A- H05 125 184
JP-A- H08 325 376     JP-A- 2005 170 963
JP-A- 2006 002 113    JP-A- 2011 032 372
JP-A- 2011 506 646

**Description**

Technical Field

The present invention relates to a semi-aromatic polyamide high in heat resistance and high in molecular weight wherein the semi-aromatic polyamide is excellent in the fluidity at the time of molding.

Background Art

Semi-aromatic polyamide is high in heat resistance and excellent in low water absorbing property, and hence is widely used as molded bodies for electric and electronic components. Recently, with the refinement of these components, semi-aromatic polyamide has been required to be improved in the fluidity at the time of molding.

For the purpose of improving the fluidity of a resin, it is generally practiced to decrease the molecular weight of the resin or to increase the molding temperature. However, in semi-aromatic polyamide, the decrease of the molecular weight disadvantageously degrades the mechanical properties of the molded body made therefrom. Semi-aromatic polyamide has a high melting point, and hence unfortunately the increase of the molding temperature promotes the degradation of the resin, and degrades the color tone of the molded body.

As a method for improving the fluidity at the time of molding in a high melting point, high molecular weight semi-aromatic polyamide, Patent Literature 1 to Patent Literature 4 each disclose a method in which a polyphenylene ether is melt kneaded with polyamide 9T. Patent Literature 5 discloses a method in which with a high melting point semi-aromatic polyamide, an amide compound having a specific structure and a bromine-based flame retardant are melt kneaded. Patent Literature 6 discloses a method in which with a high melting point semi-aromatic polyamide, an ester compound having a specific structure and a bromine-based flame retardant are melt kneaded.

However, the semi-aromatic polyamide resin compositions described in Patent Literature 1 to Patent Literature 6 are each prepared by adding a specific compound with a semi-aromatic polyamide and by melt kneading the resulting mixture, and hence are unfortunately impaired in heat resistance.

Citation List

Patent Literature

Patent Literature 1: Japanese Patent Laid-Open No. 2007-154127
Patent Literature 2: Japanese Patent Laid-Open No. 2007-169537
Patent Literature 3: Japanese Patent Laid-Open No. 2007-182551
Patent Literature 4: Japanese Patent Laid-Open No. 2011-46781
Patent Literature 5: Japanese Patent Laid-Open No. 2004-107576
Patent Literature 6: Japanese Patent Laid-Open No. 2008-208383

Summary of Invention

Technical Problem

In view of such related art as described above, the present invention takes as its object the provision of a semi-aromatic polyamide high in heat resistance and high in molecular weight, wherein the semi-aromatic polyamide is improved in the fluidity at the time of molding without degrading the color tone and the heat resistance of the obtained molded body.

Solution to Problem

The present inventors performed a series of diligent studies, and consequently have reached the present invention by discovering that the foregoing object is achieved by including a specific monocarboxylic acid component as a constitutional component of the semi-aromatic polyamide.

Specifically, the present invention has as its gist the following constitution:

(1) A semi-aromatic polyamide including an aromatic dicarboxylic acid component, an aliphatic diamine component and a monocarboxylic acid component and having a melting point of 300°C or higher, wherein the aromatic dicarboxylic acid component is terephthalic acid, the aliphatic diamine component is 1,10-decanediamine, the monocarboxylic acid component includes a monocarboxylic acid having a molecular weight of 140 or more, and the content of the monocarboxylic acid component is 1 to 8% by mass.

(2) The semi-aromatic polyamide according to (1), wherein the monocarboxylic acid is an aliphatic monocarboxylic acid.

(3) The semi-aromatic polyamide according to (2), wherein the aliphatic monocarboxylic acid is stearic acid.

(4) The semi-aromatic polyamide according to any one of (1) to (3), wherein the melt flow rate of the semi-aromatic polyamide is higher by 5 g/10 min or more than the melt flow rate of a semi-aromatic polyamide having the same composition except that the monocarboxylic acid is benzoic acid.

(5) A semi-aromatic polyamide resin composition including the semi-aromatic polyamide according to any one of (1) to (4) and a fibrous reinforcing material.

(6) The semi-aromatic polyamide resin composition according to (5), further including an antioxidant.

(7) The semi-aromatic polyamide resin composition according to (6), wherein the antioxidant is a phosphorus-based antioxidant.

(8) A molded body obtained by molding the semi-aromatic polyamide according to any one of (1) to (4) or the semi-aromatic polyamide resin composition according to any one of (5) to (7).

According to the present invention, it is possible to provide a semi-aromatic polyamide high in heat resistance and high in molecular weight wherein the semi-aromatic polyamide is improved in the fluidity at the time of molding without degrading the color tone and the heat resistance of the obtained molded body.

Description of Embodiments

Hereinafter, the present invention is described in detail.

The semi-aromatic polyamide of the present invention is constituted with an aromatic dicarboxylic acid component, an aliphatic diamine component and a monocarboxylic acid component.

The aromatic dicarboxylic acid component constituting the semi-aromatic polyamide of the present invention is terephthalic acid. The inclusion of terephthalic acid as the aromatic dicarboxylic acid component enables the heat resistance to be improved.

In the present invention, the content of the dicarboxylic acid component such as aliphatic dicarboxylic acids such as oxalic acid, malonic acid, succinic acid, glutaric acid, adipic acid, pimelic acid, suberic acid, azelaic acid, sebacic acid, undecanedioic acid and dodecanedioic acid, and alicyclic dicarboxylic acids such as cyclohexanedicarboxylic acid is preferably 5 mol% or less in relation to the total number of moles of the raw material monomers; more preferably, these dicarboxylic acids are not included substantially.

The aliphatic diamine component constituting the semi-aromatic polyamide of the present invention is 1, 10-decanediamine. The inclusion of 1, 10-decanediamine as the aliphatic diamine component enables the mechanical strength as well as the heat resistance and the fluidity at the time of molding to be improved.

In the present invention, the content of the diamine component such as alicyclic diamines such as cyclohexanediamine and such as aromatic diamines such as xylylenediamine and benzenediamine is preferably 5 mol% or less in relation to the total number of moles of the raw material monomers; more preferably, these diamines are not included substantially.

In the semi-aromatic polyamide of the present invention, if necessary, lactams such as caprolactam and laurolactam and ω-aminocarboxylic acids such as aminocaproic acid and 11-aminoundecanoic acid may be copolymerized.

The monocarboxylic acid component constituting the semi-aromatic polyamide of the present invention is required to include a monocarboxylic acid having a molecular weight of 140 or more, and preferably include a monocarboxylic acid having a molecular weight of 170 or more. When the molecular weight of the monocarboxylic acid is less than 140, the improvement effect of the fluidity is poor.

Examples of the monocarboxylic acid component include aliphatic monocarboxylic acids, alicyclic monocarboxylic acids, aromatic monocarboxylic acids; among these, aliphatic monocarboxylic acids are preferable because of being high in the improvement effect of the fluidity.

Examples of the aliphatic monocarboxylic acid having a molecular weight of 140 or more include caprylic acid, nonanoic acid, decanoic acid, lauric acid, myristic acid, palmitic acid, stearic acid and behenic acid. Among these, stearic acid is preferable because of being high in versatility.

Examples of the alicyclic monocarboxylic acid having a molecular weight of 140 or more include 4-ethylcyclohexanecarboxylic acid, 4-hexylcyclohexanecarboxylic acid and 4-laurylcyclohexanecarboxylic acid.

Examples of the aromatic monocarboxylic acid include 4-ethylbenzoic acid, 4-hexylbenzoic acid, 4-laurylbenzoic acid, alkylbenzoic acids, 1-naphthoic acid, 2-naphthoic acid and derivatives of these.

In the monocarboxylic acid component, two or more of monocarboxylic acids may be used in combination, and a monocarboxylic acid having a molecular weight of less than 140 may also be used in combination.

In the semi-aromatic polyamide of the present invention, the content of the monocarboxylic acid component is required to be 1 to 8% by mass and is preferably 2 to 5% by mass. When the content of the monocarboxylic acid component is less than 1% by mass, the fluidity at the time of molding is degraded, and the molding cycle is sometimes made longer or the exterior appearance of the molded body sometimes comes to be poor. On the other hand, when the content of the monocarboxylic acid component exceeds 8% by mass, the mechanical strength sometimes comes to be low.

In general, there are a crystalline phase and an amorphous phase in a polymer, and it is known that the crystal properties such as the melting point are determined by the state of the crystalline phase. The terminal groups in a polymer are present in the amorphous phase, and hence the melting point is not changed by the presence or absence and types of the terminal groups. In addition, the monocarboxylic acid component functioning as a terminal blocking agent is also present in the amorphous phase, and hence the inclusion of the monocarboxylic acid component does not decrease the melting point of the semi-aromatic polyamide in contrast to the case where other components are melt kneaded.

The monocarboxylic acid component used in the present invention includes a monocarboxylic acid having a molecular weight of 140 or more, and hence can improve the fluidity at the time of molding. Specifically, the melt flow rate of the semi-aromatic polyamide using a monocarboxylic acid having a molecular weight of 140 or more as the monocarboxylic acid component can be made to be higher, by 5 g/10 min or more, than the melt flow rate of a semi-aromatic polyamide having the same composition except that benzoic acid, having a molecular weight of 122, is used as the monocarboxylic acid component, and preferably can be made to be higher by 7 g/10 min or more.

The monocarboxylic acid component is chemically bonded to the terminals of the polymer chain of the semi-aromatic polyamide, and hence when the semi-aromatic polyamide is exposed to a high temperature, outgas is hardly generated. Accordingly, the monocarboxylic acid component is particularly effective for the semi-aromatic polyamide frequently processed or used at high temperatures.

The semi-aromatic polyamide of the present invention is also excellent in the mold releasability at the time of molding. Accordingly, when injection molding is performed, it is possible to allow the molded body to be easily taken out from the die without undergoing deformation.

The semi-aromatic polyamide of the present invention is required to have a melting point of 300°C or higher and is preferably 320°C or higher. A semi-aromatic polyamide having a melting point of lower than 300°C can be easily improved in fluidity by an increase in temperature to an extent of causing no degradation of color tone, and accordingly does not necessarily need such a technique to improve the fluidity as performed in the present invention.

In the semi-aromatic polyamide of the present invention, the relative viscosity as measured in 96% sulfuric acid, at 25°C and at a concentration of 1 g/dL is preferably 1.8 or more, more preferably 1.8 to 2.6 and furthermore preferably 1.9 to 2.4. When the relative viscosity is less than 1.8, the fluidity at the time of molding is originally excellent, and accordingly such a technique to improve the fluidity as performed in the present invention is not necessarily needed. The relative viscosity can be adopted as an index of the molecular weight.

The semi-aromatic polyamide of the present invention can be produced by using a hitherto known method such as a heat polymerization method or a solution polymerization method. Among these methods, the heat polymerization method is preferably used because of being industrially advantageous. Examples of the heat polymerization method include a method including a step (i) of obtaining a reaction product from an aromatic dicarboxylic acid component, an aliphatic diamine component and a monocarboxylic acid component, and a step (ii) of polymerizing the obtained reaction product.

Examples of the step (i) include a method in which an aromatic dicarboxylic acid powder and the monocarboxylic acid are mixed with each other, the resulting mixture is beforehand heated to a temperature equal to or higher than the melting point of the aliphatic diamine and equal to or lower than the melting point of the aromatic dicarboxylic acid, and the aliphatic diamine is added to the aromatic dicarboxylic acid powder and the monocarboxylic acid at this temperature in such a way that substantially no water is allowed to be contained so as for the powder state of the aromatic dicarboxylic acid to be maintained.

Alternatively, examples of the step (1) include another method in which a suspension liquid composed of the aliphatic diamine in a molten state, the solid aromatic dicarboxylic acid and the solid monocarboxylic acid is stirred for mixing to obtain a liquid mixture, then at a temperature lower than the melting point of the finally produced semi-aromatic polyamide, the salt production reaction based on the reaction between the aromatic dicarboxylic acid, the aliphatic diamine and the monocarboxylic acid and the production reaction of the low polymeric substance based on the polymerization of the produced salt are performed, and thus a mixture composed of the salt and the low polymeric substance is obtained. In this case, crushing may be performed while the reaction is being allowed to proceed, or alternatively, crushing may be performed after the mixture is once taken out after the reaction. As the step (i), the former method easy in controlling the shapes of the reactants is preferable.

Examples of the step (ii) includes a method in which the reactants obtained in the step (i) are subjected to a solid phase polymerization at a temperature lower than the melting point of the finally produced semi-aromatic polyamide, and thus the molecular weight is increased to a predetermined molecular weight so as to be a high molecular weight to yield the semi-aromatic polyamide. The solid phase polymerization is preferably performed at a polymerization temperature of 180 to 270°C, with a reaction time of 0.5 to 10 hours, in a flow of inert gas such as nitrogen.

The reaction apparatuses for the step (i) and the step (ii) are not particularly limited, and heretofore known apparatuses may be used as such reaction apparatuses. The step (i) and the step (ii) may be performed with the same apparatus, or with different apparatuses.

Examples of the heating method in the heat polymerization method include, without being particularly limited to: a method in which a reaction vessel is heated with media such as water, steam and heat-transfer oil, a method in which an reaction vessel is heated with an electric heater, and a method in which the frictional heat produced by the movement of the content such as the stirring heat generated by stirring is used. The heating method may also be a combination of these methods.

In the production of the semi-aromatic polyamide, a polymerization catalyst may be used in order to increase the polymerization efficiency. Examples of the polymerization catalyst include phosphoric acid, phosphorous acid and hypophosphorous acid or the salts of these acids; the polymerization catalyst is preferably used in an addition amount of 2 mol% or less in relation to the total number of moles of the aromatic dicarboxylic acid and the aliphatic diamine.

To the semi-aromatic polyamide of the present invention, various additives may be added, if necessary, to prepare a semi-aromatic polyamide resin composition. Examples of the additives include fibrous reinforcing material, plate-like reinforcing materials, impact improvers, antistatic agents, conductivity imparting agents, thermally conductive fillers, aliphatic polyamides, amorphous polyamides, heat stabilizers, light stabilizers, sliding property improvers, flame retardants, flame retardant aids and pigments. The additives may be used each alone or in combinations.

In general, when various additives are added to the semi-aromatic polyamide, the fluidity at the time of molding tends to be degraded. In particular, when a fibrous reinforcing material is added, the degradation of the fluidity is remarkable. The semi-aromatic polyamide of the present invention is excellent in fluidity as described above, and is advantageous when an additive tending to degrade the fluidity is used.

Examples of the fibrous reinforcing material include carbon fiber, glass fiber, boron fiber, asbestos fiber, polyvinyl alcohol fiber, polyester fiber, acrylic fiber, wholly aromatic polyamide fiber, polybenzoxazole fiber, polytetrafluoroethylene fiber, kenaf fiber, bamboo fiber, hemp fiber, bagasse fiber, high strength polyethylene fiber, alumina fiber, silicon carbide fiber, potassium titanate fiber, brass fiber, stainless steel fiber, steel fiber, ceramic fiber, basalt fiber, sepiolite and palygorskite. The addition of the fibrous reinforcing material enables the mechanical strength to be improved. Among these, glass fiber, carbon fiber and metal fiber are preferable because of being high in heat resistance and easy in availability. The fibrous reinforcing materials may be used in combinations of two or more thereof. The fibrous reinforcing materials may be surface-treated with a silane coupling agent. Examples of the silane coupling agent include vinylsilane-based, acrylic silane-based, epoxysilane-based and aminosilane-based silane coupling agents; aminosilane-based coupling agents are preferable because of being high in the adhesiveness to the semi-aromatic polyamide.

The average fiber length of the fibrous reinforcing material is preferably 0.1 to 7 mm and more preferably 0.5 to 6 mm. The average fiber length of the fibrous reinforcing material being 0.1 to 7 mm improves the mechanical properties of the semi-aromatic polyamide without exerting any adverse effect on the moldability. The average fiber diameter is preferably 3 to 20 $\mu$m and more preferably 5 to 13 $\mu$m. The average fiber diameter being 3 to 20 $\mu$m enables the mechanical properties of the semi-aromatic polyamide to be improved while breakage is being reduced at the time of melt kneading. The cross-sectional shape is preferably a circular cross-section, but may also be, if necessary, a rectangular cross-section, an elliptical (oblate) cross-section, and other non-circular cross-sections.

When the fibrous reinforcing material is used, the content of the fibrous reinforcing material is, in relation to 100 parts by mass of the semi-aromatic polyamide, preferably set at 5 to 200 parts by mass, more preferably set at 10 to 180 parts by mass, furthermore preferably set at 20 to 150 parts by mass and most preferably set at 30 to 130 parts by mass.

Examples of the plate-like reinforcing material include talc, mica, sericite, glass flake, plate-like calcium carbonate, plate-like aluminum hydroxide, graphite, kaolin and swelling layered silicate. The addition of a plate-like reinforcing material enables the dimensional stability to be improved.

When the plate-like reinforcing material is used, the content of the plate-like reinforcing material is, in relation to 100 parts by mass of the semi-aromatic polyamide, preferably 40 parts by mass or less and more preferably 20 parts by mass or less.

Examples of the impact improver include: olefin-based polymers such as (ethylene and/or propylene)·α-olefin-based copolymer, (ethylene and/or propylene)·(α,β-unsaturated carboxylic acid and/or unsaturated carboxylic acid and/or unsaturated carboxylic acid ester)-based copolymer; and elastomers such as styrene-based elastomers. The addition of the impact improver enables the impact resistance or the weld strength to be improved.

Examples of the antistatic agent include anionic antistatic agents, cationic antistatic agents and nonionic antistatic agents; examples of the conductivity imparting agent include carbon black, carbon fiber and metal fiber. The addition of the antistatic agent or the conductivity imparting agent enables the surface resistivity value or the volume resistivity value to be decreased.

Examples of the thermally conductive filler include talc, aluminum oxide, magnesium oxide, zinc oxide, magnesium carbonate, silicon carbide, aluminum nitride, boron nitride, silicon nitride, carbon and graphite. The addition of the thermally conductive filler enables the thermal conductivity to be improved.

Examples of the aliphatic polyamide include polyamide 6, polyamide 66, polyamide 610, polyamide 11 and polyamide 12. The addition of the aliphatic polyamide enables the vibration fatigue strength to be improved.

Examples of the amorphous polyamide include: a polycondensation product of isophthalic acid/terephthalic acid/1, 6-hexanediamine/bis(3-methyl-4-aminocyclohexyl)methane, a polycondensation product of terephthalic acid/2, 2, 4-trimethyl-1, 6-hexanediamine/2, 4, 4-trimethyl-1, 6-hexanediamine, a polycondensation product of isophthalic acid /bis(3-methyl-4-aminocyclohexyl)methane/ω-laurolactam, a polycondensation product of isophthalic acid/terephthalic acid/1, 6-hexanediamine, a polycondensation product of isophthalic acid/2, 2, 4-trimethyl-1, 6-hexanediamine/2, 4, 4-trimethyl-1, 6-hexanediamine, a polycondensation product of isophthalic acid/terephthalic acid/2, 2, 4-trimethyl-1, 6-hexanediamine/2, 4, 4-trimethyl-1, 6-hexanediamine, a polycondensation product of isophthalic acid/bis(3-methyl-4-aminocyclohexyl)methane/ω-laurolactam, and a polycondensation product of isophthalic acid/terephthalic acid/other diamine components. The amorphous polyamide means a polyamide having a heat of fusion of 1 cal/g or less, as measured with a differential scanning calorimeter (DSC) in nitrogen atmosphere at a temperature increase rate of 16°C/min. The addition of the amorphous polyamide enables, for example, the surface glossiness to be improved.

When the amorphous polyamide is used, the content of the amorphous polyamide is, in relation to 100 parts by mass of the semi-aromatic polyamide, preferably set at 10 to 100 parts by mass and more preferably set at 10 to 30 parts by mass.

Examples of the heat stabilizer include hindered phenolic compounds, phosphite-based compounds, hindered amine-based compounds, triazine-based compounds and sulfur-based compounds. The addition of the heat stabilizer enables the decrease of the molecular weight or the color degradation of the semi-aromatic polyamide to be suppressed.

When the heat stabilizer is used, the content of the heat stabilizer is, in relation to 100 parts by mass of the semi-aromatic polyamide, preferably set at 6 parts by mass or less and more preferably set at 3 parts by mass or less.

Examples of the light stabilizer include benzophenone-based compounds, benzotriazole-based compounds, salicylate-based compounds, hindered amine-based compounds and hindered phenolic compounds. The addition of the light stabilizer enables the decrease of the molecular weight of the semi-aromatic polyamide due to ultraviolet light to be suppressed.

When the light stabilizer is used, the content of the light stabilizer is, in relation to 100 parts by mass of the semi-aromatic polyamide, preferably set at 6 parts by mass or less and more preferably set at 3 parts by mass or less.

Examples of the sliding property improver include: fluororesins such as polytetrafluoroethylene; and silicones such as polydimethylsiloxane and fluorine-modified polydimethylsiloxane.

Examples of the flame retardant include: bromine-containing flame retardants, nitrogen-containing flame retardants, phosphorus-containing flame retardants and nitrogen-phosphorus-containing flame retardants; and hydrated metal-based flame retardants.

Examples of the bromine-containing flame retardants include brominated polystyrene, polybrominated styrene and brominated polyphenylene ether. Among these, bromine-containing flame retardants containing bromine in a content of 40 to 80% by mass are preferable and bromine-containing flame retardants containing bromine in a content of 50 to 70% by mass are preferable because of being high in the improvement effect of flame retardancy. These bromine-containing flame retardants are preferably used in combination with flame retardant aids such as antimony trioxide, antimony tetroxide, antimony pentoxide, sodium antimonate, tin(IV) oxide, iron(III) oxide, zinc oxide and zinc borate.

Examples of the nitrogen-containing flame retardants include melamine-based compounds, salts between cyanuric acid or isocyanuric acid and melamine compounds, salts between phosphoric acid or polyphosphoric acids and ammonia- or melamine-based compounds.

Examples of the phosphorus-containing flame retardants include phosphoric acid ester compounds, phosphinic acid salts and diphosphinic acid salts.

Examples of the nitrogen-phosphorus-containing flame retardants may include adducts (melamine adducts) formed from melamine or the condensation products of melamine and phosphoric acid. Examples of the phosphoric acids constituting the melamine adducts include orthophosphoric acid, phosphonic acid, phosphinic acid, metaphosphoric acid, pyrophosphoric acid, triphosphoric acid and tetraphosphoric acid.

Examples of the hydrated metal-based flame retardants include aluminum hydroxide, boehmite, magnesium hydroxide, calcium hydroxide and calcium aluminate.

In addition, examples of the flame retardants also include inorganic flame retardants such as zinc borate and mixtures between zinc borate and other zinc salts.

When the flame retardant is used, the content of the flame retardant is, in relation to 100 parts by mass of the semi-aromatic polyamide, preferably set at 5 to 100 parts by mass, more preferably set at 7.5 to 40 parts by mass and furthermore preferably 10 to 30 parts by mass.

Examples of the pigment include titanium oxide, zinc oxide, zinc sulfide, zinc sulfate, barium sulfate, calcium carbonate and aluminum oxide.

When the pigment is used, the content of the pigment is, in relation to 100 parts by mass of the semi-aromatic polyamide, preferably set at 10 to 60 parts by mass, more preferably set at 15 to 50 parts by mass and furthermore preferably set at 20 to 40 parts by mass.

Titanium oxide sometimes promotes photolysis, and hence, for example, when titanium oxide is included as a pigment in the semi-aromatic polyamide in the application to LED reflectors, it is preferable to include a light stabilizer or a heat stabilizer in combination with titanium oxide.

When the fibrous reinforcing material is used, it is particularly preferable to include the antioxidant.

When the semi-aromatic polyamide including the fibrous reinforcing material is retained in the cylinder at a high temperature for a long period of time, the surface treatment agent of the fibrous reinforcing material is thermally decomposed and thus, sometimes, degrade the mechanical strength of the semi-aromatic polyamide. However, in the present invention, even when the semi-aromatic polyamide is retained in the cylinder, in other words, when the molding cycle is long at the time of injection molding, or when the injection amount is small and hence the resin is retained in the cylinder for a long period of time, the inclusion of the antioxidant enables the decrease of the tensile strength to be suppressed. The antioxidant is usually included for the purpose of suppression of decreasing the molecular weight or suppression of degrading the color of the semi-aromatic polyamide. In the present invention, in addition to these effects, the antioxidant enables the retention stability of the semi-aromatic polyamide to be improved. Among others, the use of the phosphorus-based antioxidant enables the retention stability of the semi-aromatic polyamide to be dramatically improved.

The phosphorus-based antioxidant may be either an inorganic compound or an organic compound, and examples of the phosphorus-based antioxidant include, without being particularly limited to: inorganic phosphoric acid salts such as monosodium phosphate, disodium phosphate, trisodium phosphate, sodium phosphite, calcium phosphite, magnesium phosphite and manganese phosphite; and triphenyl phosphite, trioctadecyl phosphite, tridecyl phosphite, trinonylphenyl phosphite, diphenylisodecyl phosphite, bis(2,6-di-tert-butyl-4-methylphenyl)pentaerythritol diphosphite (Adeka Stab PEP-36, manufactured by Adeka Corp.), tris(2, 4-di-tert-butylphenyl)phosphite, distearylpentaerythritol diphosphite (Adeka Stab PEP-8, manufactured by Adeka Corp.), bis(nonylphenyl)pentaerythritol diphosphite (Adeka Stab PEP-4C, manufactured by Adeka Corp.), tetrakis(2, 4-de-t-butylphenyl)-4, 4-biphenylylene diphosphite (Hostanox P-EPQ, manufactured by Clariant (Japan) K.K.). Among these, bis(2,6-di-tert-butyl-4-methylphenyl)pentaerythritol diphosphite and tetrakis(2, 4-di-t-butylphenyl)-4, 4-biphenylylene diphosphite are preferable. These may be used each alone or in combinations.

The content of the phosphorus-based antioxidant is, in relation to 100 parts by mass of the semi-aromatic polyamide, preferably 0.01 to 5 parts by mass and more preferably 0.1 to 1.0 part by mass.

The methods for adding the above-described additives are not particularly limited; however, the melt kneading method using a twin screw kneader is suitably used. The kneading temperature is required to be equal to or higher than the melting point of the semi-aromatic polyamide, and is preferably to be lower than (the melting point + 100°C). The kneading temperature set to be equal to or higher than the melting point of the semi-aromatic polyamide and lower than (the melting point + 100°C) enables the decomposition and the yellowing of the semi-aromatic polyamide kneader to be suppressed while the occurrence of the overloading and vent up in the kneader is being suppressed.

The kneaded product is extruded preferably in a strand shape and pelletized. When the fibrous reinforcing material is used as an additives, the fiber bundles of the fibrous reinforcing material are beforehand opened, and by allowing the fiber bundles to pass through the semi-aromatic polyamide being in a molten state, the semi-aromatic polyamide may be impregnated into the fiber bundles of the fibrous reinforcing material and the resulting semi-aromatic polyamide may be extruded in a strand shape and pelletized.

By injection molding the semi-aromatic polyamide of the present invention or the resin composition of the semi-aromatic polyamide, a molded body of the semi-aromatic polyamide or the composition thereof can be obtained. Examples of the injection molding machine to be used in the injection molding include, without being particularly limited to: a screw in-line type injection molding machine and a plunger type injection molding machine.

The semi-aromatic polyamide or the resin composition of the semi-aromatic polyamide heat-melted in the cylinder of the injection molding machine is metered every shot, injected into a die in a molten state, cooled and solidified in a predetermined shape, and then taken out as a molded body from the die.

The resin temperature at the time of injection molding is required to be set at a temperature equal to or higher than the melting point of the semi-aromatic polyamide and is preferably set to be lower than (the melting point + 100°C).

The semi-aromatic polyamide to be used for injection molding is preferably sufficiently dried. A semi-aromatic polyamide high in water content undergoes foaming in the cylinder of an injection molding machine, and sometimes it comes to be difficult to obtain an optimal molded body. The water content of the semi-aromatic polyamide to be used for injection molding is preferably less than 0.3% by mass and more preferably less than 0.1% by mass.

The semi-aromatic polyamide of the present invention or the resin composition of the semi-aromatic polyamide is excellent in the fluidity at the time of molding, and hence can be widely used for the molded bodies as automobile components, electric and electronic components, miscellaneous goods components and civil engineering and construction components. Among others, the semi-aromatic polyamide of the present invention is high in heat resistance, and hence can be suitably used for the molded bodies for use in automobile components and electric and electronic components.

As the applications to automobile components, the semi-aromatic polyamide of the present invention can be suitably used, for example, for the following components: engine peripheral components such as engine cover, air intake manifold, throttle body, air intake pipe, radiator tank, radiator support, radiator horse, radiator grill, timing belt cover, water pump inlet, water pump outlet, cooling fan, fan shroud and engine mount; mechanism components such as propeller shaft, stabilizer bar linkage rod, accelerator pedal, pedal module, seal ring, bearing retainer, gear, driven gear and electric power steering gear; fuel-piping system components such as oil pan, oil filter housing, oil filter cap, oil level gauge, fuel tank, fuel tube, fuel cut-off valve, canister, fuel delivery pipe, fuel filler neck, fuel sender module and fuel pipe joint; electrical components such as wire harness, relay block, sensor housing, encapsulation, ignition coil, distributor, thermostat housing, quick connector, lamp reflector, lamp housing, lamp extension, lamp socket and horn bobbin; various interior and exterior components such as muffler cover, intake duct, rear spoiler, wheel cover, wheel cap, cowl vent grille, air outlet louver, air scoop, hood bulge, fender, backdoor, shift lever housing, window regulator, door lock, door handle and outside door mirror stay.

Examples of the applications to electric and electronic components include connectors, LED reflectors, switches, sensors, sockets, capacitors, jacks, fuse holders, relays, coil bobbins, resistors, ICs, LED housings and various enclosures.

Examples of the applications to miscellaneous goods components include resin screws, clock frames and fasteners.

The semi-aromatic polyamide of the present invention or the resin composition of the semi-aromatic polyamide can be formed into films and sheets by heretofore known film formation methods such as T-die extrusion and inflation molding.

The films and sheets obtained by molding the semi-aromatic polyamide of the present invention or the resin composition of the semi-aromatic polyamide can be used in the applications to, for example, speaker oscillation plates and film capacitors.

The semi-aromatic polyamide of the present invention or the resin composition of the semi-aromatic polyamide can also be formed into various fibers by heretofore known spinning methods such as a melt-spinning method, a flush spinning method and an electrospinning method.

The fibers obtained by molding the semi-aromatic polyamide of the present invention or the resin composition of the semi-aromatic polyamide can be used in the applications to, for example, air-bag foundation cloth, heat-resistant filters, fibers for reinforcing radiator hoses, bristles for brush, fishing lines, tire cords, artificial lawns, carpets, fishing nets, ropes, fibers for filter, and fibers for seat sheet.

Examples

Hereinafter, the present invention is described specifically by way of Examples. However, the present invention is not limited by these Examples.

1. Analysis Methods

The measurements of the physical properties of the semi-aromatic polyamide were performed by the following methods.

(1) Melting Point

By using a differential scanning calorimeter DSC-7, manufactured by Perkin-Elmer Corp., the temperature was increased to 350°C at a temperature increase rate of 20°C/min, then the temperature was maintained at 350°C for 5 minutes, and then the temperature was decreased to 25°C at a temperature decrease rate of 20°C/min. The temperature was maintained at 25°C for 5 minutes, and then the temperature was increased at a temperature increase rate of 20°C/min; the top of the endothermic peak observed in the course of the temperature increase was taken as the melting point.

(2) Relative Viscosity

The relative viscosity was measured by using 96% sulfuric acid as a solvent at a concentration of 1g/dL, at 25°C.

(3) Melt Flow Rate (MFR)

The melt flow rate (MFR) was measured according to JIS K-7210, under a load of 1.2 kgf/cm$^2$, and as presented under the heading of the temperature condition in Tables 1 to 4, at 330°C in Example 2, at 370°C in Comparative Example 2, at 390°C in Comparative Examples 8, 14 and 20, and at 350°C in other Examples and Comparative Examples.

(4) Bar Flow Length

The injection molding machine S2000i-100B manufactured by Fanuc Corp. was used, the cylinder temperature was set, as presented under the heading of the temperature condition in Tables 1 to 4, at 330°C in Example 2, at 370°C in Comparative Example 2, at 390°C in Comparative Examples 8, 14 and 20, and at 350°C in other Examples and Comparative Examples, the die temperature was set at 130°C, the molding was performed with a dedicated die having a one-point gate on one side thereof, mounted at a leading end of a cylinder, under the conditions of a clamping force of 100 tons, an injection pressure of 100 MPa, an injection speed of 50 mm/sec and an injection time of 5 seconds, and thus, the bar flow length was measured. The dedicated die has a shape allowing an L-shaped molded body of 0.4 mm in thickness and 20 mm in width to be obtained, has a gate at the center of the vortex, and has a flow length of 150 mm at most.

It is meant that the longer the flow length is, the more excellent the fluidity is.

(5) Flexural Strength and Flexural Modulus of Elasticity

After the semi-aromatic polyamide was sufficiently dried, injection molding was performed using an injection molding machine (EC100, manufactured by Toshiba Machine Co., Ltd.), and thus, a 127mmx12.7mmx3.2mm molded body was prepared. The cylinder was set, as presented under the heading of the temperature condition in Tables 1 to 4, at 330°C in Example 2, at 370°C in Comparative Example 2, at 390°C in Comparative Examples 8, 14 and 20, and at 350°C in other Examples and Comparative Examples. The injection pressure was set at 100 MPa, the injection time was set at 10 seconds and the taking-out time was set at 5 seconds.

By using the obtained molded body, according to ASTM D790, the flexural strength and the flexural modulus of elasticity were measured.

(6) L-Value and Whiteness

A 100 mm × 40 mm × 2 mm molded body was prepared in the same manner as in the foregoing (5). By using the obtained molded body, according to JIS Z8730, the brightness (L-value), the redness (a-value) and the yellowness (b-value) based on Hunter's color difference formula were obtained, and the whiteness W was derived on the basis of the following formula:

$$W = 100 - [(100 - L)^2 + a^2 + b^2]^{1/2}$$

(7) Mold Releasability

Cup-shaped molded bodies of 4 cm in diameter, 2.5 cm in height and 1 mm in thickness was prepared in the same manner as in the foregoing (5). Ten of the obtained cup-shaped molded bodies were visually observed, and the case where the number of the cup-shaped molded bodies having cracks, surface peelings or scratches was null was marked with G(Good), and the case where the number of the cup-shaped molded bodies having cracks, surface peelings or scratches was one or more was marked with P(Poor).

(8) Deflection Temperature Under Load

By using the molded body prepared in the foregoing (5), according to ASTM D648, the deflection temperature under load was measured under a load of 1.8 MPa.

(9) Retention Stability

The injection molding machine S2000i-100B manufactured by Fanuc Corp. was used, the cylinder temperature was set at 340°C, the die temperature was set at 130°C, and then a specimen (127 mm×12.7 mm×3.2 mm) was molded under the conditions of a clamping force of 100 tons, an injection pressure of 100 MPa, an injection speed of 50 mm/sec and a molding cycle of 20 seconds. The tensile strength of the obtained specimen was measured according to ASTM D790. The resulting tensile strength was defined as "the usual tensile strength."

Alternatively, after the resin was retained in the cylinder of the injection molding machine for 10 minutes, a specimen was molded by performing injection molding in the same manner as described above. The tensile strength of the thus obtained specimen was defined as "the tensile strength after retention." By using the following formula, the tensile strength retention rate was obtained, and adopted as a retention stability index. The tensile strength retention rate is preferably 80% or more and more preferably 90% or more.

Tensile strength retention rate (%) = Tensile strength after retention/usual tensile strength $\times$ 100

(10) Reflectance

By using the molded body prepared in the foregoing (6), the light reflectance at a wavelength of 470 nm was measured with the spectrophotometer SE6000 manufactured by Nippon Denshoku Industries Co., Ltd.

(11) Reflectance Retention Rate

The molded body undergoing the measurement of the light reflectance in the foregoing (10) was heated with a hot air dryer set at 180°C for 14 hours, and thus, the retention rate of the light reflectance between before and after heating was derived.

(12) Soldering Heat Resistance

The molded body prepared in the foregoing (5) was allowed to stand in an atmosphere at 40°C and 95% RH(relative humidity) for 100 hours, and then heated at 150°C for 1 minute in an infrared heating furnace. Next, the molded body was increased in temperature to 265°C at a rate of 100°C/min, and maintained at 265°C for 10 seconds. The case where no deformation or no swelling occurred in the molded body was marked with G(Good), and the case where deformation or swelling occurred was marked with P(Poor).

(13) Surface Roughness (surface gloss index)

A 50 mm $\times$ 90 mm $\times$ 2 mm molded body was prepared in the same manner as in the foregoing (5). By using the obtained molded body, the average surface roughness ($\mu$m) of the randomly selected ten portions of the molded body was measured with a surface roughness meter (Model SE-3400 Surfcorder) manufactured by Kosaka Laboratory Ltd. Practically, the case where the average roughness was 20 $\mu$m or less was evaluated to be small in surface roughness and excellent in surface gloss.

(14) Blistering Resistance

The molded body prepared in the foregoing (5) was allowed to stand in a constant-temperature constant-humidity chamber (Model FH14C, manufactured by ETAC Unit, Kusumoto Chemicals, Ltd.) set at 50°C and 95% RH for 96 hours, then placed in a reflow tester (Model RF330, manufactured by Japan Pulse Laboratories, Inc.) and the exterior appearance change was examined. The reflow tester was controlled under the conditions of preheating (150°C, 70 seconds), reflow (at 220°C or higher, 50 seconds), the maximum temperature (260°C, within 10 seconds) at the time of reflow). The case where no exterior appearance change was observed was marked with G(Good) and the case where air bubbles occurred in the exterior appearance was marked with P(Poor).

(15) Flame Retardancy

The injection molding machine (Model $\alpha$-100iA) manufactured by Fanuc Corp.) was used, and the cylinder temperature was set, as presented under the heading of the temperature condition in Table 4, at 390°C in Comparative Example 20 and at 350°C in Examples and Comparative Examples other than Example 20, the die temperature was set at 100°C, thus a specimen was molded, and the flame retardancy of the specimen was measured according to the evaluation standard of UL94 (the standard specified by Under Writers Laboratories Inc., U.S.). The thickness of the specimen was set at 1/32 inch (about 0.8 mm), and the case where the V-2 level in the evaluation standard was not reached was evaluated as "V-not." In the present evaluation, the level of V-1 or higher was evaluated to be acceptable.

2. Starting Materials

The starting materials used are shown below.

(1) Aromatic Dicarboxylic Acid Components

- TPA: Terephthalic acid
- IPA: Isophthalic acid

(2) Aliphatic Diamine components

- DDA: 1,10-Decanediamine
- HMDA: 1,6-Hexanediamine
- NDA: 1,9-Nonanediamine

(3) Monocarboxylic Acid Components

- STA: Stearic acid (molecular weight: 284)
- CP: Caprylic acid (molecular weight: 144)
- LA: Lauric acid (molecular weight: 200)
- LBA: 4-Laurylbenzoic acid (molecular weight: 290)
- BHA: Behenic acid (molecular weight: 341)
- BA: Benzoic acid (molecular weight: 122)
- CA: Caproic acid (molecular weight: 116)

(4) Fibrous Reinforcing Material

- GF-1: Glass fiber (03JAFT692, manufactured by Asahi Fiber Glass Co., Ltd., average fiber diameter: 10 $\mu$m, average fiber length: 3 mm)
- GF-2: Glass fiber (CS3G225S, manufactured by Nitto Boseki Co., average fiber diameter: 9.5 $\mu$m, average fiber length: 3 mm)
- Oblate GF: Oblate glass fiber (CSG3PA820S, manufactured by Nitto Boseki Co., Ltd., major axis: 28 $\mu$m, minor axis: 7 $\mu$m, average fiber length: 3 mm)

(5) Phosphorus-Based Antioxidants

- PA-1: Tetrakis(2,4-di-t-butylphenyl)-4,4-biphenylilene diphosphite (Hostanox P-EPQ, manufactured by Clariant (Japan) K.K.)
- PA-2: Bis(2,6-di-tert-butyl-4-methylphenyl)pentaerythritoldiphosphite (Adeka Stab PEP-36, manufactured by Adeka Corp.)

(6) Plate-Like Reinforcing Material

- K-1: Talc (Micro Ace K-1, manufactured by Nippon Talc Co., Ltd., average particle size: 8 $\mu$m)

(7)White Pigments

- CR-63: Tipaque CR-63, manufactured by Ishihara Sangyo Kaisha, Ltd., average particle size: 0.21 $\mu$m
- CR-61: Tipaque CR-61, manufactured by Ishihara Sangyo Kaisha, Ltd., average particle size: 0.21 $\mu$m
- PF-740: Tipaque PF-740, manufactured by Ishihara Sangyo Kaisha, Ltd., average particle size: 0.25 $\mu$m

(8) Heat Stabilizer

- Irganox: Hindered phenolic compound (Irganox 1098, manufactured by BASF Corp.)

(9) Light Stabilizer

- Chimassorb: Hindered amine-based compound (Chimassorb 119FL, manufactured by BASF Corp.)

(10) Amorphous Polyamides

- X21: Polycondensation product of isophthalic acid/terephthalic acid/1,6-hexanediamine (X21, manufactured by DSM Corp., glass transition temperature: 138°C, relative viscosity: 2.0, heat of fusion: 0.1 cal/g)
- CX-3000: Polycondensation product of isophthalic acid/terephthalic acid/1,6-hexanediamine/bis(3-methyl-4-aminocyclohexyl)methane (CX-3000, manufactured by Unitika Ltd., glass transition temperature: 125°C, relative viscosity: 1.9, heat of fusion: 0.1 cal/g)

(11) Flame Retardants

- Exolit: Mixture of phosphinic acid salt and diphosphinic acid salt (Exolit OP1230, manufactured by Clariant K.K.)
- Melapur: Polyphosphoric acid melamine (Melapur 200/70, manufactured by BASF Corp.)
- AD-220T: Boehmite (Tomita AD-220T, manufactured by Tomita Pharmaceutical Co., Ltd.)

Examples 1 and 2

In a ribbon blender type reactor, 4.70 kg of terephthalic acid (TPA) in powder form as an aromatic dicarboxylic acid component, 0.32 kg of stearic acid (STA) having a molecular weight of 284 as an monocarboxylic acid component, and 9.3 g of sodium hypophosphite monohydrate as a polymerization catalyst were placed, and the resulting mixture was heated while being stirred at a number of rotations of 30 rpm to 170°C under sealing with nitrogen. Subsequently, while the temperature was being maintained at 170°C and the number of rotations was also being maintained at 30 rpm, by using a liquid injection apparatus, 4.98 kg of 1,10-decanediamine (DDA) heated to 100°C was continuously (continuous liquid injection procedure) added over 2.5 hours as an aliphatic diamine component to yield a reactant. The molar ratio between the starting material monomers was terephthalic acid:1,10-decanediamine:stearic acid = 49:50:1.
Subsequently, the obtained reactant was polymerized in the same reactor by heating at 250°C, at a number of rotations of 30 rpm for 8 hours, then the reaction product was taken out in a strand shape, and successively allowed to pass through a water tank to be cooled and solidified, and the solidified reaction product was cut with a pelletizer to yield a semi-aromatic polyamide (P-1) pellet.

Examples 3 to 12 and Comparative Examples 1 to 6

In Examples 3 to 12 and Comparative Examples 1 to 6, semi-aromatic polyamide pellets (P-2 to P-16) were respectively obtained in the same manner as in Example 1 except that the types and contents of the individual components were altered as shown in Table 1.
All examples of the type P-10 and P-11 are outside of the scope of the invention.
Table 1 shows the compositions and the properties of the semi-aromatic polyamides obtained in Examples 1 to 12 and Comparative Examples 1 to 6, and the temperature conditions at the time of the measurements and at the time of the molding in these Examples and Comparative Examples.

[Table 1]

| | | Composition of semi-aromatic polyamide | | | | | | | | | | Properties | | | | | |
|---|---|---|---|---|---|---|---|---|---|---|---|---|---|---|---|---|---|
| | | Type | Aromatic dicarboxylic acid component | | Aliphatic diamine component | | Monocarboxylic acid component | | | | | Melting point | Relative viscosity | Temperature condition | MFR | Bar flow length | Flexural strength | L-value | Mold releasability |
| | | | Type | Content | Type | Content | Type | Molecular weight | Content | | °C | | °C | g/10 min | mm | MPa | | |
| | | | | mol% | | mol% | | | mol% | % by mass | | | | | | | | |
| Examples | 1 | P-1 | TPA | 49.0 | DDA | 50.0 | STA | 284 | 1.0 | 3.2 | 317 | 2.25 | 350 | 11 | 46 | 157 | 74 | G |
| | 2 | | | | | | | | | | | | 330 | 8 | 35 | 153 | 74 | G |
| | 3 | P-2 | TPA | 49.7 | DDA | 50.0 | STA | 284 | 0.3 | 1.0 | 317 | 2.79 | 350 | 7 | 30 | 144 | 74 | G |
| | 4 | P-3 | TPA | 49.5 | DDA | 50.0 | STA | 284 | 0.5 | 1.6 | 317 | 2.71 | 350 | 9 | 33 | 148 | 77 | G |
| | 5 | P-4 | TPA | 48.1 | DDA | 50.0 | STA | 284 | 1.9 | 6.2 | 316 | 1.88 | 350 | 22 | 70 | 132 | 75 | G |
| | 6 | P-5 | TPA | 47.6 | DDA | 50.0 | STA | 284 | 2.4 | 7.6 | 313 | 1.81 | 350 | 41 | 121 | 120 | 76 | G |
| | 7 | P-6 | TPA | 49.0 | DDA | 50.0 | CP | 144 | 1.0 | 1.7 | 317 | 2.25 | 350 | 9 | 40 | 155 | 77 | G |
| | 8 | P-7 | TPA | 49.0 | DDA | 50.0 | LA | 200 | 1.0 | 2.3 | 316 | 2.27 | 350 | 10 | 41 | 152 | 75 | G |
| | 9 | P-8 | TPA | 49.0 | DDA | 50.0 | LBA | 290 | 1.0 | 3.3 | 318 | 2.26 | 350 | 10 | 41 | 160 | 72 | G |
| | 10 | P-9 | TPA | 49.0 | DDA | 50.0 | BHA | 341 | 1.0 | 3.8 | 317 | 2.26 | 350 | 14 | 46 | 158 | 73 | G |
| | 11 | P-10 | TPA /IPA | 32.8 /16.2 | HMDA | 50.0 | STA | 284 | 1.0 | 4.7 | 333 | 2.01 | 350 | 11 | 42 | 134 | 67 | G |
| | 12 | P-11 | TPA | 49.0 | NDA | 50.0 | STA | 284 | 1.0 | 3.2 | 310 | 2.31 | 350 | 11 | 44 | 147 | 71 | G |
| Comparative Examples | 1 | P-12 | TPA | 49.0 | DDA | 50.0 | BA | 122 | 1.0 | 1.4 | 317 | 2.24 | 350 | 4 | 22 | 157 | 75 | P |
| | 2 | | | | | | | | | | | | 370 | 8 | 31 | 153 | 60 | P |
| | 3 | P-13 | TPA | 47.8 | DDA | 50.0 | BA | 122 | 2.2 | 3.1 | 316 | 1.67 | 350 | 13 | 47 | 67 | 67 | P |
| | 4 | P-14 | TPA | 49.8 | DDA | 50.0 | STA | 284 | 0.2 | 0.8 | 315 | 2.97 | 350 | 5 | 24 | 156 | 73 | P |
| | 5 | P-15 | TPA | 47.2 | DDA | 50.0 | STA | 284 | 2.8 | 8.9 | 315 | 1.58 | 350 | 45 | 150 | 55 | 69 | G |
| | 6 | P-16 | TPA | 49.0 | DDA | 50.0 | CA | 116 | 1.0 | 1.3 | 315 | 2.27 | 350 | 5 | 23 | 155 | 77 | P |

TPA: Terephthalic acid; IPA: Isophthalic acid; DDA: 1,10-Decanediamine; HMDA: 1,6-Hexanediamine; NDA: 1,9-Nonanediamine;
STA: Stearic acid; CP: Caprylic acid; LA: Lauric acid; LBA: 4-Laurylbenzoic acid; BHA: Behenic acid; BA: Benzoic acid; CA: Caproic acid
Temperature condition: Temperature at the time of MFR measurement and cylinder temperature at the time of the bar flow length measurement and at the time of the molded body preparation.

Example 13

To the main feeding opening of a same direction double screw extruder (TEM 37BS, manufactured by Toshiba Machine Co., Ltd.) with a screw diameter of 37 mm and L/D40, 100 parts by mass of the semi-aromatic polyamide (P-1) was fed under metering by using the loss-in-weight type continuous metering feeder CE-W-1 manufactured by Kubota Corp., 30 parts by mass of a fibrous reinforcing material (GF-1) was fed from a side feeder, and the resulting mixture was melt kneaded. The cylinder temperature of the extruder was 320 to 340°C, the number of rotations of the screw was 250 rpm, and the discharge rate was 35 kg/hr.

Next, the molten resin composition was taken out from the die in a strand shape, then allowed to pass through a water tank to be cooled and solidified, the solidified product was cut with a pelletizer to yield a semi-aromatic polyamide resin composition pellet.

Examples 14 to 27 and Comparative Examples 7 to 12

Semi-aromatic polyamide resin composition pellets were obtained in the same manner as in Example 13 except that the compositions of the resin compositions were altered as shown in Table 2.

Table 2 shows the compositions and the properties of the semi-aromatic polyamide resin compositions obtained in Examples 13 to 27 and Comparative Examples 7 to 12, and the temperature conditions at the time of the measurements and at the time of the molding in these Examples and Comparative Examples.

[Table 2]

| | | Semi-aromatic polyamide resin composition (parts represent parts by mass) | | | | | | | | | | | | Properties | | | | | | | | |
|---|---|---|---|---|---|---|---|---|---|---|---|---|---|---|---|---|---|---|---|---|---|---|---|
| | | Semi-aromatic polyamide | | | | | | | Fibrous reinforcing material | | Antioxidant | | | | | MFR | Bar flow length | Flexural strength | Deflection temperature under load | L-value | Mold releasability | Retention stability |
| | | Type | Aromatic dicarboxylic acid component | Aliphatic diamine component | Monocarboxylic acid component | | | parts by mass | | | | | Melting point | Relative viscosity | Temperature condition | | | | | | | |
| | | | | | Type | Molecular weight | Content in polyamide | | GF-1 | GF-2 | PA-1 | PA-2 | | | | g/10 min | | | | | | |
| | | | Type | Type | | | % by mass | | parts | parts | parts | parts | °C | | °C | | mm | MPa | °C | | | % |
| Examples | 13 | P-1 | TPA | DDA | STA | 284 | 3.2 | 100 | 30 | - | - | - | 317 | 2.25 | 350 | 9 | 36 | 230 | 311 | 72 | G | 61 |
| | 14 | P-2 | TPA | DDA | STA | 284 | 1.0 | 100 | 30 | - | - | - | 317 | 2.79 | 350 | 7 | 25 | 226 | 308 | 72 | G | 62 |
| | 15 | P-3 | TPA | DDA | STA | 284 | 1.6 | 100 | 30 | - | - | - | 317 | 2.75 | 350 | 7 | 25 | 224 | 309 | 75 | G | 62 |
| | 16 | P-4 | TPA | DDA | STA | 284 | 6.2 | 100 | 30 | - | - | - | 316 | 1.86 | 350 | 16 | 58 | 191 | 310 | 73 | G | 61 |
| | 17 | P-5 | TPA | DDA | STA | 284 | 7.6 | 100 | 30 | - | - | - | 313 | 1.81 | 350 | 13 | 48 | 182 | 310 | 74 | G | 62 |
| | 18 | P-1 | TPA | DDA | STA | 284 | 3.2 | 100 | - | 30 | 1.0 | - | 317 | 2.25 | 350 | 9 | 35 | 230 | 311 | 74 | G | 97 |
| | 19 | P-1 | TPA | DDA | STA | 284 | 3.2 | 100 | 30 | - | - | 1.0 | 317 | 2.25 | 350 | 9 | 36 | 230 | 311 | 73 | G | 93 |
| | 20 | P-6 | TPA | DDA | CP | 144 | 1.7 | 100 | 30 | - | - | - | 317 | 2.25 | 350 | 7 | 26 | 228 | 311 | 75 | G | 60 |
| | 21 | P-7 | TPA | DDA | LA | 200 | 2.3 | 100 | 30 | - | - | - | 316 | 2.27 | 350 | 9 | 35 | 230 | 309 | 73 | G | 59 |
| | 22 | P-8 | TPA | DDA | LBA | 290 | 3.3 | 100 | 30 | - | - | - | 318 | 2.26 | 350 | 8 | 33 | 236 | 311 | 70 | G | 60 |
| | 23 | P-9 | TPA | DDA | BHA | 341 | 3.8 | 100 | 30 | - | - | - | 317 | 2.26 | 350 | 11 | 38 | 227 | 307 | 71 | G | 60 |
| | 24 | P-10 | TPA /IPA | HMDA | STA | 284 | 4.7 | 100 | 30 | - | - | - | 333 | 2.01 | 350 | 8 | 34 | 199 | 318 | 65 | G | 60 |
| | 25 | P-11 | TPA | NDA | STA | 284 | 3.2 | 100 | 30 | - | - | - | 310 | 2.31 | 350 | 10 | 36 | 211 | 299 | 69 | G | 61 |
| | 26 | P-1 | TPA | DDA | STA | 284 | 3.2 | 100 | 5 | - | - | - | 317 | 2.25 | 350 | 32 | 72 | 180 | 311 | 75 | G | 75 |
| | 27 | P-1 | TPA | DDA | STA | 284 | 3.2 | 100 | 200 | - | - | - | 317 | 2.25 | 350 | 7 | 25 | 220 | 313 | 65 | G | 60 |
| Comparative Examples | 7 | P-12 | TPA | DDA | BA | 122 | 1.4 | 100 | 30 | - | - | - | 317 | 2.24 | 350 | 2 | 11 | 231 | 310 | 73 | P | 59 |
| | 8 | P-12 | TPA | DDA | BA | 122 | 1.4 | 100 | 30 | - | - | - | 317 | 2.24 | 390 | 7 | 26 | 222 | 306 | 58 | P | 60 |
| | 9 | P-13 | TPA | DDA | BA | 122 | 3.1 | 100 | 30 | - | - | - | 316 | 1.67 | 350 | 8 | 31 | 110 | 314 | 65 | P | 60 |
| | 10 | P-14 | TPA | DDA | STA | 284 | 0.8 | 100 | 30 | - | - | - | 315 | 2.97 | 350 | 2 | 12 | 230 | 313 | 71 | P | 59 |
| | 11 | P-15 | TPA | DDA | STA | 284 | 8.9 | 100 | 30 | - | - | - | 315 | 1.54 | 350 | 14 | 41 | 87 | 312 | 67 | G | 61 |
| | 12 | P-16 | TPA | DDA | CA | 116 | 1.3 | 100 | 30 | - | - | - | 315 | 2.27 | 350 | 2 | 11 | 229 | 310 | 75 | P | 60 |

TPA: Terephthalic acid; IPA: Isophthalic acid; DDA: 1,10-Decanediamine; HMDA: 1,6-Hexanediamine; NDA: 1,9-Nonanediamine;
STA: Stearic acid; CP: Caprylic acid; LA: Lauric acid; LBA: 4-Laurylbenzoic acid; BHA: Behenic acid; BA: Benzoic acid; CA: Caproic acid

Temperature condition: Temperature at the time of MFR measurement and cylinder temperature at the time of the bar flow length measurement and at the time of the molded body preparation.

Example 28

A mixture was prepared by dry blending 100 parts by mass of the semi-aromatic polyamide (P-1), 25 parts by mass of a white pigment (CR-63), 0.5 part by mass of a heat stabilizer (Irganox) and 0.5 part by mass of a light stabilizer (Chimassorb); to the main feeding opening of a same direction double screw extruder (TEM 37BS, manufactured by Toshiba Machine Co., Ltd.) with a screw diameter of 37 mm and L/D40, the mixture was fed under metering by using the loss-in-weight type continuous metering feeder CE-W-1 manufactured by Kubota Corp., 30 parts by mass of a fibrous reinforcing material (GF-1) was fed from a side feeder, and the resulting mixture was melt kneaded. The cylinder temperature of the extruder was 320 to 340°C, the number of rotations of the screw was 250 rpm, and the discharge rate was 35 kg/hr.

Next, the molten resin composition was taken out from the die in a strand shape, then allowed to pass through a water tank to be cooled and solidified, the solidified product was cut with a pelletizer to yield a semi-aromatic polyamide resin composition pellet.

Examples 29 to 46 and Comparative Examples 13 to 18

Semi-aromatic polyamide resin composition pellets were obtained in the same manner as in Example 28 except that the compositions of the resin compositions were altered as shown in Table 3. The fibrous reinforcing materials (GF-1, oblate GF) were fed from a side feeder and others are fed from the main feeding opening.

Table 3 shows the compositions and the properties of the semi-aromatic polyamide resin compositions obtained in Examples 28 to 46 and Comparative Examples 13 to 18, and the temperature conditions at the time of the measurements and at the time of the molding in these Examples and Comparative Examples.

[Table 3]

| | No. | Type | Aromatic dicarboxylic acid component | Aliphatic diamine component | Monocarboxylic acid Type | Molecular weight | Content in polyamide (% by mass) | parts by mass | GF-1 (parts) | Oblate GF (parts) | K-1 (parts) | CR-63 (parts) | CR-61 (parts) | PF-740 (parts) | Irga nox (parts) | Chima ssorb (parts) | Melting point (°C) | Relative viscosity | Temperature condition (°C) | MFR (g/10 min) | Bar flow length (mm) | Flexural strength (MPa) | Flexural modulus of elasticity (GPa) | Deflection temperature under load (°C) | Whiteness (%) | Reflectance (%) | Reflectance retention rate (%) | Soldering heat resistance |
|---|---|---|---|---|---|---|---|---|---|---|---|---|---|---|---|---|---|---|---|---|---|---|---|---|---|---|---|---|
| Examples | 28 | P-1 | TPA | DDA | STA | 284 | 3.2 | 100 | 30 | - | - | 25 | - | - | 0.5 | 0.5 | 317 | 2.25 | 350 | 8 | 35 | 200 | 6.9 | 292 | 94 | 93 | 82 | G |
| | 29 | P-2 | TPA | DDA | STA | 284 | 1.0 | 100 | 30 | - | - | 25 | - | - | 0.5 | 0.5 | 317 | 2.79 | 350 | 6 | 25 | 200 | 6.8 | 290 | 94 | 94 | 81 | G |
| | 30 | P-3 | TPA | DDA | STA | 284 | 1.6 | 100 | 30 | - | - | 25 | - | - | 0.5 | 0.5 | 317 | 2.75 | 350 | 8 | 26 | 202 | 7.1 | 290 | 93 | 93 | 84 | G |
| | 31 | P-4 | TPA | DDA | STA | 284 | 6.2 | 100 | 30 | - | - | 25 | - | - | 0.5 | 0.5 | 316 | 1.86 | 350 | 17 | 49 | 161 | 6.6 | 295 | 94 | 92 | 83 | G |
| | 32 | P-5 | TPA | DDA | STA | 284 | 7.6 | 100 | 30 | - | - | 25 | - | - | 0.5 | 0.5 | 313 | 1.81 | 350 | 20 | 52 | 152 | 5.9 | 289 | 95 | 93 | 84 | G |
| | 33 | P-6 | TPA | DDA | CP | 144 | 1.7 | 100 | 30 | - | - | 25 | - | - | 0.5 | 0.5 | 317 | 2.25 | 350 | 8 | 27 | 195 | 6.7 | 291 | 93 | 92 | 82 | G |
| | 34 | P-7 | TPA | DDA | LA | 200 | 2.3 | 100 | 30 | - | - | 25 | - | - | 0.5 | 0.5 | 316 | 2.27 | 350 | 9 | 36 | 200 | 6.9 | 290 | 92 | 93 | 84 | G |
| | 35 | P-8 | TPA | DDA | LBA | 290 | 3.3 | 100 | 30 | - | - | 25 | - | - | 0.5 | 0.5 | 318 | 2.26 | 350 | 10 | 34 | 208 | 6.7 | 293 | 92 | 91 | 83 | G |
| | 36 | P-9 | TPA | DDA | BHA | 341 | 3.8 | 100 | 30 | - | - | 25 | - | - | 0.5 | 0.5 | 317 | 2.26 | 350 | 10 | 34 | 201 | 7.0 | 289 | 91 | 91 | 82 | G |
| | 37 | P-10 | TPA/IPA | HMDA | STA | 284 | 4.7 | 100 | 30 | - | - | 25 | - | - | 0.5 | 0.5 | 333 | 2.01 | 350 | 9 | 38 | 172 | 6.2 | 297 | 92 | 94 | 81 | G |
| | 38 | P-11 | TPA | NDA | STA | 284 | 3.2 | 100 | 30 | - | - | 25 | - | - | 0.5 | 0.5 | 310 | 2.31 | 350 | 11 | 36 | 183 | 6.3 | 282 | 93 | 91 | 85 | G |
| | 39 | P-1 | TPA | DDA | STA | 284 | 3.2 | 100 | 10 | - | - | 25 | - | - | 0.5 | 0.5 | 317 | 2.25 | 350 | 16 | 40 | 170 | 5.1 | 259 | 93 | 92 | 81 | G |
| | 40 | P-1 | TPA | DDA | STA | 284 | 3.2 | 100 | 80 | - | - | 25 | - | - | 0.5 | 0.5 | 317 | 2.25 | 350 | 6 | 25 | 250 | 10.0 | 312 | 92 | 90 | 85 | G |
| | 41 | P-1 | TPA | DDA | STA | 284 | 3.2 | 100 | - | - | - | 10 | - | - | 0.5 | 0.5 | 317 | 2.25 | 350 | 12 | 46 | 151 | 5.0 | 181 | 90 | 90 | 89 | G |
| | 42 | P-1 | TPA | DDA | STA | 284 | 3.2 | 100 | - | - | - | 60 | - | - | 0.5 | 0.5 | 317 | 2.25 | 350 | 11 | 43 | 148 | 5.5 | 208 | 98 | 96 | 86 | G |
| | 43 | P-1 | TPA | DDA | STA | 284 | 3.2 | 100 | - | 30 | - | 25 | - | - | 0.5 | 0.5 | 317 | 2.25 | 350 | 8 | 36 | 205 | 7.1 | 295 | 92 | 96 | 83 | G |
| | 44 | P-1 | TPA | DDA | STA | 284 | 3.2 | 100 | - | 30 | - | - | 25 | - | 0.5 | 0.5 | 317 | 2.25 | 350 | 8 | 35 | 210 | 7.1 | 294 | 96 | 92 | 81 | G |
| | 45 | P-1 | TPA | DDA | STA | 284 | 3.2 | 100 | - | 30 | - | - | - | 25 | 0.5 | 0.5 | 317 | 2.25 | 350 | 8 | 37 | 202 | 7.0 | 295 | 94 | 94 | 83 | G |
| | 46 | P-1 | TPA | DDA | STA | 284 | 3.2 | 100 | - | 30 | 10 | 25 | - | - | 0.5 | 0.5 | 317 | 2.25 | 350 | 7 | 32 | 190 | 6.4 | 286 | 90 | 91 | 81 | G |
| Comparative Examples | 13 | P-12 | TPA | DDA | BA | 122 | 1.4 | 100 | 30 | - | - | 25 | - | - | 0.5 | 0.5 | 317 | 2.24 | 350 | 3 | 15 | 183 | 6.8 | 286 | 94 | 92 | 80 | G |
| | 14 | P-12 | TPA | DDA | BA | 122 | 1.4 | 100 | 30 | - | - | 25 | - | - | 0.5 | 0.5 | 317 | 2.24 | 390 | 10 | 29 | 179 | 7.0 | 286 | 84 | 81 | 81 | G |
| | 15 | P-13 | TPA | DDA | BA | 122 | 3.1 | 100 | 30 | - | - | 25 | - | - | 0.5 | 0.5 | 316 | 1.67 | 350 | 14 | 45 | 136 | 4.1 | 290 | 91 | 91 | 85 | G |
| | 16 | P-14 | TPA | DDA | STA | 284 | 0.8 | 100 | 30 | - | - | 25 | - | - | 0.5 | 0.5 | 315 | 2.97 | 350 | 1 | 6 | 222 | 7.2 | 288 | 93 | 92 | 82 | G |
| | 17 | P-15 | TPA | DDA | STA | 284 | 8.9 | 100 | 30 | - | - | 25 | - | - | 0.5 | 0.5 | 315 | 1.54 | 350 | 22 | 60 | 132 | 4.2 | 292 | 91 | 92 | 83 | G |
| | 18 | P-16 | TPA | DDA | CA | 116 | 1.3 | 100 | 30 | - | - | 25 | - | - | 0.5 | 0.5 | 315 | 2.27 | 350 | 4 | 20 | 180 | 6.9 | 276 | 94 | 93 | 82 | G |

TPA: Terephthalic acid; IPA: Isophthalic acid; DDA: 1,10-Decanediamine; HMDA: 1,6-Hexanediamine; NDA: 1,9-Nonanedieamine;
STA: Stearic acid; CP: Caprylic acid; LA: Lauric acid; LBA: 4-Laurylbenzoic acid; BHA: Behenic acid; BA: Benzoic acid; CA: Caproic acid

Temperature condition: Temperature at the time of MFR measurement and cylinder temperature at the time of the bar flow length measurement and at the time of the molded body preparation.

EP 2 759 562 B1

Example 47

A mixture was prepared by dry blending 100 parts by mass of the semi-aromatic polyamide (P-1), 25 parts by mass of an amorphous polyamide (X21), 39 parts by mass of a flame retardant (Exolit), 10 parts by mass of a flame retardant (Melapur) and 0.9 part by mass of a flame retardant (AD-220T); to the main feeding opening of a same direction double screw extruder (TEM 37BS, manufactured by Toshiba Machine Co., Ltd.) with a screw diameter of 37 mm and L/D40, the mixture was fed under metering by using the loss-in-weight type continuous metering feeder CE-W-1 manufactured by Kubota Corp., and the mixture was melt kneaded. The cylinder temperature of the extruder was 320 to 340°C, the number of rotations of the screw was 250 rpm, and the discharge rate was 35 kg/hr.

Next, the molten resin composition was taken out from the die in a strand shape, then allowed to pass through a water tank to be cooled and solidified, the solidified product was cut with a pelletizer to yield a semi-aromatic polyamide resin composition pellet.

Examples 48 to 64 and Comparative Examples 19 to 24

Semi-aromatic polyamide resin composition pellets were obtained in the same manner as in Example 47 except that the compositions of the resin compositions were altered as shown in Table 4. The fibrous reinforcing material (GF-1) was fed from a side feeder and others are fed from the main feeding opening.

Table 4 shows the compositions and the properties of the semi-aromatic polyamide resin compositions obtained in Examples 47 to 64 and Comparative Examples 19 to 24, and the temperature conditions at the time of the measurements and at the time of the molding in these Examples and Comparative Examples.

[Table 4]

| | | Semi-aromatic polyamide resin composition (parts represent parts by mass) | | | | | | | | | | | | | | Properties | | | | | | | | |
|---|---|---|---|---|---|---|---|---|---|---|---|---|---|---|---|---|---|---|---|---|---|---|---|---|---|
| | | Semi-aromatic polyamide | | | | | | | Fibrous reinforcing material | Amorphous polyamide | | Flame retardants | | | Melting point | Relative viscosity | Temperature condition | MFR | Bar flow length | Flexural strength | Flexural modulus of elasticity | Surface roughness | Blistering resistance | Flame retardancy |
| | | Type | Aromatic dicarboxylic acid component | Aliphatic diamine component | Monocarboxylic acid component | | | parts by mass | GF-1 | X21 | CX-3000 | Exolit | Mela pur | AD-220T | | | | | | | | | | |
| | | | | | Type | Molecular weight | Content in polyamide | | | | | | | | | | | g/10 min | | | | | | |
| | | | | | | | % by mass | | parts | parts | parts | parts | parts | parts | °C | | °C | | mm | MPa | GPa | µm | | |
| Examples | 47 | P-1 | TPA | DDA | STA | 284 | 3.2 | 100 | - | 25 | - | 39 | 10 | 0.9 | 317 | 2.25 | 350 | 12 | 45 | 161 | 3.8 | 0.4 | G | V-0 |
| | 48 | P-2 | TPA | DDA | STA | 284 | 1.0 | 100 | - | 25 | - | 39 | 10 | 0.9 | 317 | 2.79 | 350 | 8 | 30 | 171 | 4.5 | 0.4 | G | V-0 |
| | 49 | P-3 | TPA | DDA | STA | 284 | 1.6 | 100 | - | 25 | - | 39 | 10 | 0.9 | 317 | 2.75 | 350 | 10 | 32 | 172 | 4.4 | 0.3 | G | V-0 |
| | 50 | P-4 | TPA | DDA | STA | 284 | 6.2 | 100 | - | 25 | - | 39 | 10 | 0.9 | 316 | 1.86 | 350 | 24 | 72 | 150 | 3.9 | 0.4 | G | V-0 |
| | 51 | P-5 | TPA | DDA | STA | 284 | 7.6 | 100 | - | 25 | - | 39 | 10 | 0.9 | 313 | 1.81 | 350 | 47 | 110 | 152 | 4.0 | 0.4 | G | V-0 |
| | 52 | P-6 | TPA | DDA | CP | 144 | 1.7 | 100 | - | 25 | - | 39 | 10 | 0.9 | 317 | 2.25 | 350 | 9 | 40 | 165 | 4.1 | 0.4 | G | V-0 |
| | 53 | P-7 | TPA | DDA | LA | 200 | 2.3 | 100 | - | 25 | - | 39 | 10 | 0.9 | 316 | 2.27 | 350 | 11 | 40 | 158 | 3.6 | 0.4 | G | V-0 |
| | 54 | P-8 | TPA | DDA | LBA | 290 | 3.3 | 100 | - | 25 | - | 39 | 10 | 0.9 | 318 | 2.26 | 350 | 10 | 41 | 161 | 3.9 | 0.4 | G | V-0 |
| | 55 | P-9 | TPA | DDA | BHA | 341 | 3.8 | 100 | - | 25 | - | 39 | 10 | 0.9 | 317 | 2.26 | 350 | 14 | 44 | 154 | 3.6 | 0.4 | G | V-0 |
| | 56 | P-10 | TPA /IPA | HMDA | STA | 284 | 4.7 | 100 | - | 25 | - | 39 | 10 | 0.9 | 333 | 2.01 | 350 | 13 | 42 | 168 | 4.0 | 0.3 | G | V-0 |
| | 57 | P-11 | TPA | NDA | STA | 284 | 3.2 | 100 | - | 25 | - | 39 | 10 | 0.9 | 310 | 2.31 | 350 | 12 | 45 | 165 | 3.7 | 0.5 | G | V-0 |
| | 58 | P-1 | TPA | DDA | STA | 284 | 3.2 | 100 | 30 | 25 | - | 39 | 10 | 0.9 | 317 | 2.25 | 350 | 8 | 30 | 205 | 5.8 | 3.2 | G | V-0 |
| | 59 | P-1 | TPA | DDA | STA | 284 | 3.2 | 100 | 10 | 25 | - | 39 | 10 | 0.9 | 317 | 2.25 | 350 | 9 | 39 | 198 | 5.2 | 1.1 | G | V-0 |
| | 60 | P-1 | TPA | DDA | STA | 284 | 3.2 | 100 | - | 11 | - | 39 | 10 | 0.9 | 317 | 2.25 | 350 | 7 | 26 | 170 | 4.3 | 0.2 | G | V-0 |
| | 61 | P-1 | TPA | DDA | STA | 284 | 3.2 | 100 | - | 100 | - | 39 | 10 | 0.9 | 317 | 2.25 | 350 | 18 | 51 | 152 | 3.7 | 0.8 | G | V-0 |
| | 62 | P-1 | TPA | DDA | STA | 284 | 3.2 | 100 | - | - | 25 | 39 | 10 | 0.9 | 317 | 2.25 | 350 | 13 | 46 | 161 | 3.8 | 0.5 | G | V-0 |
| | 63 | P-1 | TPA | DDA | STA | 284 | 3.2 | 100 | - | - | - | 78 | 20 | 1.8 | 317 | 2.25 | 350 | 12 | 40 | 155 | 3.6 | 1.0 | G | V-0 |
| | 64 | P-1 | TPA | DDA | STA | 284 | 3.2 | 100 | - | - | - | 4 | 1 | 0.1 | 317 | 2.25 | 350 | 14 | 52 | 173 | 4.5 | 0.1 | G | V-1 |
| Comparative Examples | 19 | P-12 | TPA | DDA | BA | 122 | 1.4 | 100 | - | 25 | - | 39 | 10 | 0.9 | 317 | 2.24 | 350 | 4 | 22 | 162 | 3.9 | 0.4 | G | V-0 |
| | 20 | | | | | | | | | | | | | | | | 390 | 8 | 35 | 158 | 3.8 | 0.8 | G | V-not*** |
| | 21 | P-13 | TPA | DDA | BA | 122 | 3.1 | 100 | - | 25 | - | 39 | 10 | 0.9 | 316 | 1.67 | 350 | 14 | 42 | 120 | 2.9 | 0.3 | G | V-0 |
| | 22 | P-14 | TPA | DDA | STA | 284 | 0.8 | 100 | - | 25 | - | 39 | 10 | 0.9 | 315 | 2.97 | 350 | 2 | 10 | 176 | 4.8 | 0.5 | G | V-0 |
| | 23 | P-15 | TPA | DDA | STA | 284 | 8.9 | 100 | - | 25 | - | 39 | 10 | 0.9 | 315 | 1.54 | 350 | 48 | 126 | 111 | 3.2 | 0.4 | G | V-0 |
| | 24 | P-16 | TPA | DDA | CA | 116 | 1.3 | 100 | - | 25 | - | 39 | 10 | 0.9 | 315 | 2.27 | 350 | 5 | 22 | 163 | 3.5 | 0.4 | G | V-0 |

TPA: Terephthalic acid; IPA: Isophthalic acid; DDA: 1,10-Decanediamine; HMDA: 1,6-Hexanediamine; NDA: 1,9-Nonanediamine;
STA: Stearic acid; CP: Caprylic acid; LA: Lauric acid; LBA: 4-Laurylbenzoic acid; BHA: Behenic acid; BA: Benzoic acid; CA: Caproic acid

Temperature condition: Temperature at the time of MFR measurement and cylinder temperature at the time of the bar flow length measurement and at the time of the molded body preparation.

The semi-aromatic polyamides (P-1 to P-11) of Examples 1 to 12 each using a monocarboxylic acid having a molecular weight of 140 or more as the monocarboxylic acid component maintained the color tones or the melting points equivalent to those in the cases each using a monocarboxylic acid having a molecular weight of less than 140, and additionally had a bar flow length of 30 mm or more, and were more satisfactory in fluidity than the cases each using a monocarboxylic acid having a molecular weight of less than 140.

The semi-aromatic polyamide resin compositions of Examples 13 to 64, in each of which additives such as glass fiber were melt-kneaded with one of the semi-aromatic polyamides (P-1 to P-11), maintained the color tones, the melting points or the heat resistance values equivalent to those in the cases each using a monocarboxylic acid having a molecular weight of less than 140, and additionally had a bar flow length of 25 mm or more, and were satisfactory in fluidity.

From a comparison between Examples 1 and 9, a comparison between Examples 13 and 22, and a comparison between Examples 47 and 54, it is found that the use of an aliphatic dicarboxylic acid results in a larger fluidity improvement effect than the use of an aromatic monocarboxylic acid even when the molecular weights of these monocarboxylic acids are of the same order of magnitude.

From a comparison between Examples 1 and 12, a comparison between Examples 13 and 25, and a comparison between Examples 28 and 38, it is found that the use of 1,10-decanediamine as an aliphatic diamine component results in a higher flexural strength than the use of 1,9-nonanediamine as an aliphatic diamine component.

The semi-aromatic polyamides of Comparative Examples 1, 7, 13 and 19 used benzoic acid (molecular weight: 122) having a molecular weight of less than 140 as a monocarboxylic acid component, and consequently were short in the bar flow length.

In Comparative Examples 2, 8 and 14, the semi-aromatic polyamides (resin compositions) of Comparative Example 1, 7 and 13 were respectively subjected to a measurement of the bar flow length under a high temperature condition and were all found to be long in the bar flow length; however, the molded bodies obtained by molding under such a high temperature condition resulted in a drastic polymer degradation, and were found to be low in the L-value, whiteness and reflectance.

In Comparative Examples 3, 9, 15 and 21, the contents of the monocarboxylic acid components in the semi-aromatic polyamides of Comparative Examples 1, 7, 13 and 19 were respectively increased to decrease the relative viscosity; consequently, in any of Comparative Examples 3, 9, 15 and 21, the bar flow length was increased, but the obtained molded body exhibited a low flexural strength.

In each of the semi-aromatic polyamides of Comparative Examples 4, 10, 16 and 22, the content of the monocarboxylic acid having a molecular weight of 140 or more was smaller than the content range specified in the present invention, and hence the bar flow length was short.

In each of the semi-aromatic polyamides of Comparative Examples 5, 11, 17 and 23, the content of the monocarboxylic acid having a molecular weight of 140 or more was larger than the content range specified in the present invention, and hence the flexural strength of the obtained molded body was low.

In each of the semi-aromatic polyamides of Comparative Examples 6, 12, 18 and 24, similarly in each of the Comparative Examples 1, 7, 13 and 19, the molecular weight of the monocarboxylic acid was smaller than the value specified in the present invention, and hence the bar flow length was short.

**Claims**

1. A semi-aromatic polyamide comprising an aromatic dicarboxylic acid component, an aliphatic diamine component and a monocarboxylic acid component and having a melting point of 300°C or higher,
   **characterized in that**:

   the aromatic dicarboxylic acid component is terephthalic acid,
   the aliphatic diamine component is 1,10-decanediamine,
   the monocarboxylic acid component is a monocarboxylic acid having a molecular weight of 140 or more, and
   a content of the monocarboxylic acid component is 1 to 8 % by mass.

2. The semi-aromatic polyamide according to claim 1, wherein the monocarboxylic acid is an aliphatic monocarboxylic acid.

3. The semi-aromatic polyamide according to claim 2, wherein the aliphatic monocarboxylic acid is stearic acid.

4. The semi-aromatic polyamide according to any one of claims 1 to 3, wherein a melt flow rate of the semi-aromatic polyamide is higher by 5 g/10 min or more than a melt flow rate of a semi-aromatic polyamide having the same composition except that the monocarboxylic acid is benzoic acid.

5. A semi-aromatic polyamide resin composition comprising the semi-aromatic polyamide according to any one of claims 1 to 4 and a fibrous reinforcing material.

6. The semi-aromatic polyamide resin composition according to claim 5, further comprising an antioxidant.

7. The semi-aromatic polyamide resin composition according to claim 6, wherein the antioxidant is a phosphorus-based antioxidant.

8. A molded body obtained by molding the semi-aromatic polyamide according to any one of claims 1 to 4 or the semi-aromatic polyamide resin composition according to any one of claims 5 to 7.

**Patentansprüche**

1. Teilaromatisches Polyamid, umfassend eine aromatische Dicarbonsäurekomponente, eine aliphatische Diaminkomponente und eine Monocarbonsäurekomponente, und aufweisend einen Schmelzpunkt von 300 °C oder höher, **dadurch gekennzeichnet, dass**:

   die aromatische Dicarbonsäurekomponente Terephthalsäure ist,
   die aliphatische Diaminkomponente 1,10-Decandiamin ist,
   die Monocarbonsäurekomponente eine Monocarbonsäure mit einem Molekulargewicht von 140 oder mehr ist,
   und ein Gehalt der Monocarbonsäurekomponente 1 bis 8 Masse-% ist.

2. Teilaromatisches Polyamid nach Anspruch 1, wobei die Monocarbonsäure eine aliphatische Monocarbonsäure ist.

3. Teilaromatisches Polyamid nach Anspruch 2, wobei die aliphatische Monocarbonsäure Stearinsäure ist.

4. Teilaromatisches Polyamid nach einem der Ansprüche 1 bis 3, wobei eine Schmelzflussrate des teilaromatischen Polyamids um 5 g/10 min oder mehr höher ist als eine Schmelzflussrate eines teilaromatischen Polyamids mit der gleichen Zusammensetzung mit der Ausnahme, dass die Monocarbonsäure Benzoesäure ist.

5. Teilaromatische Polyamidharzzusammensetzung umfassend das teilaromatische Polyamid nach einem der Ansprüche 1 bis 4 und faseriges Verstärkungsmaterial.

6. Teilaromatische Polyamidharzzusammensetzung nach Anspruch 5, ferner umfassend ein Antioxidans.

7. Teilaromatische Polyamidharzzusammensetzung nach Anspruch 6, wobei das Antioxidans ein Antioxidans auf Phosphorbasis ist.

8. Formkörper, erhalten durch Formen des teilaromatischen Polyamids nach einem der Ansprüche 1 bis 4 oder der teilaromatischen Polyamidharzzusammensetzung nach einem der Ansprüche 5 bis 7.

**Revendications**

1. Polyamide semi-aromatique comprenant un composant d'acide dicarboxylique aromatique, un composant de diamine aliphatique et un composant d'acide monocarboxylique et ayant un point de fusion supérieur ou égal à 300°C, **caractérisé en ce que** :

   le composant d'acide dicarboxylique aromatique est l'acide téréphtalique,
   le composant de diamine aliphatique est la 1,10-décanediamine,
   le composant d'acide monocarboxylique est un acide monocarboxylique ayant un poids moléculaire supérieur ou égal à 140, et
   une teneur en composant d'acide monocarboxylique est de 1 à 8% en masse.

2. Polyamide semi-aromatique selon la revendication 1, dans lequel l'acide monocarboxylique est un acide monocarboxylique aliphatique.

3. Polyamide semi-aromatique selon la revendication 2, dans lequel l'acide monocarboxylique aliphatique est l'acide stéarique.

4. Polyamide semi-aromatique selon l'une quelconque des revendications 1 à 3, dans lequel un indice de fluidité du polyamide semi-aromatique est supérieur de 5 g/10 min ou plus à un indice de fluidité d'un polyamide semi-aromatique ayant la même composition sauf que l'acide monocarboxylique est l'acide benzoïque.

5. Composition de résine de polyamide semi-aromatique comprenant le polyamide semi-aromatique selon l'une quelconque des revendications 1 à 4 et un matériau de renforcement fibreux.

6. Composition de résine de polyamide semi-aromatique selon la revendication 5, comprenant en outre un antioxydant.

7. Composition de résine de polyamide semi-aromatique selon la revendication 6, dans laquelle l'antioxydant est un antioxydant à base de phosphore.

8. Corps moulé obtenu par moulage du polyamide semi-aromatique selon l'une quelconque des revendications 1 à 4 ou de la composition de résine de polyamide semi-aromatique selon l'une quelconque des revendications 5 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007154127 A
- JP 2007169537 A
- JP 2007182551 A
- JP 2011046781 A
- JP 2004107576 A
- JP 2008208383 A